# EUROPEAN PATENT APPLICATION

(11) **EP 4 151 428 A1**
(43) Date of publication of application: **22.03.2023**
(21) Application number: 21793809.1
(22) Date of filing: 22.04.2021
(51) Int. Cl.: B60B 27/00, B60B 27/06

(54) **WHEEL BEARING ASSEMBLY**

(30) Priority: 22.04.2020 KR 20200048997
(71) Applicant: Iljin Global Co., Ltd., Seoul 06157 (KR)
(72) Inventor: OH, Moon Taek, Seoul 08350 (KR); JIN, Seong Kyu, Jinju-si Gyeongsangnam-do 52716 (KR)
(74) Representative: RGTH
(86) International application number: PCT/KR2021/005126
(87) International publication number: WO 2021/215858

(57) **Abstract**

An aspect of the present invention provides a wheel bearing assembly for supporting a wheel of a vehicle so that the wheel is rotatably mounted on a vehicle body. A wheel bearing assembly according to an example embodiment of the present invention may comprise: a wheel bearing configured to support a rotary element so that the rotary element rotates relative to a non-rotary element via rolling bodies; and a brake disk mounted to the rotary element of the wheel bearing. According to an example embodiment of the present invention, the brake disk may comprise a friction plate in friction contact with a brake pad, and a disk mounting portion used to couple the friction plate to the rotary element of the wheel bearing. According to an example embodiment of the present invention, one of the rotary element of the wheel bearing and the disk mounting portion of the brake disk may be provided with at least one coupling protruded portion formed to protrude in a radial direction, the other of the rotary element of the wheel bearing and the disk mounting portion of the brake disk may be provided with at least one coupling recess into which the coupling protruded portion is inserted to be coupled to the coupling recess, and the coupling protruded portion may be accommodated in and coupled to the coupling recess with a fastening clip provided between the coupling protruded portion and the coupling recess.

## Description

### [Technical Field]

The present invention relates to a wheel bearing assembly used for rotatably mounting and supporting a wheel of a vehicle on a vehicle body, and more particularly to a wheel bearing assembly having a improved fastening structure between a wheel bearing and a brake disk.

### [Background Art]

A bearing is a part that rotatably supports a rotary element relative to a non-rotary element in a rotating device. A wheel bearing is used for supporting a wheel of a vehicle so that the wheel is rotatably mounted on a vehicle body.

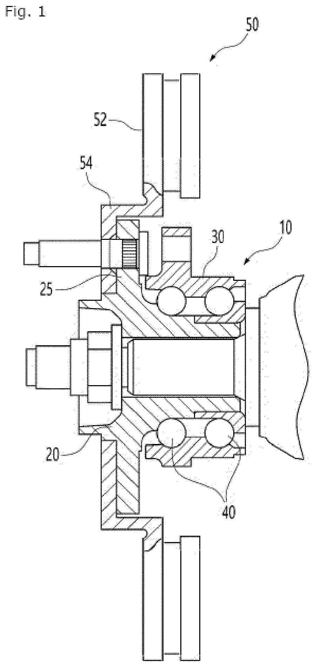

For example, referring to FIG. 1, there is exemplarily illustrated a wheel bearing assembly for a vehicle 10 which has been used in the related art. As illustrated in FIG. 1, the wheel bearing assembly 10 may be configured such that a rotary element 20 to which a wheel is mounted is connected to a non-rotary element 30 fixed to a vehicle body through rolling bodies 40 and the wheel mounted on the rotary element 20 is rotatably supported on the vehicle body. A brake dick 50 may be coupled to the rotary element 20 of the wheel bearing assembly to brake the rotation of the wheel by frictional contact between the brake disk 50 and a brake pad (not illustrated) provided in the vehicle.

Meanwhile, the brake disk 50 may comprise a sliding portion 52 configured to be in a fricative contact with the brake pad, and a disk flange 54 used to fasten the brake disk 50 to the rotary element 20 of the wheel bearing. The disk flange 54 may be formed to extend in a radially inward direction from the sliding portion 52 of a disk structure and may be configured to be fastened to a mounting flange 25 provided on the rotary element 20.

However, the brake disk 50 having such a structure is configured such that the disk flange 54 is formed to extend longer from the sliding portion 52 in the radially inward direction. This may increase the overall weight of the brake disk 50. The disk flange 54 is fixed to the mounting flange 25 of the wheel bearing through screwing or the like. As a result, the brake disk 50 may be thermally deformed by heat generated during braking, which may cause vibration or noise.

As measures to solve such a matter, various studies have been conducted on a brake disk and/or a wheel bearing that is capable of absorbing thermal deformation generated in the brake disk.

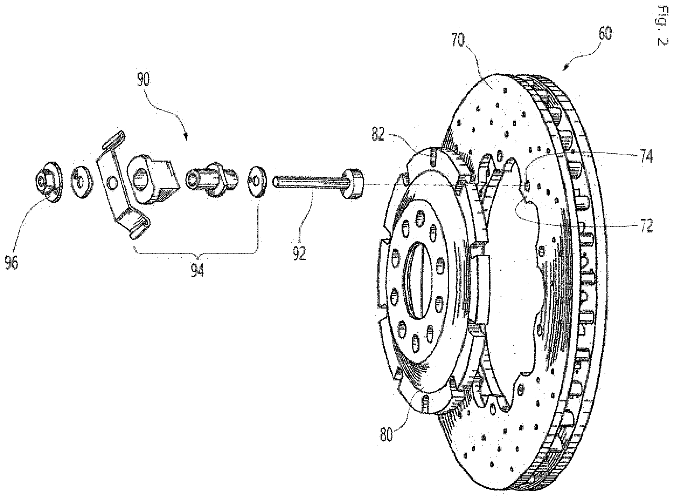

For example, referring to FIG. 2, there is exemplarily illustrated an example of a floating type brake disk having an improved mounting structure capable of absorbing radial thermal expansion generated in the brake disk.

As illustrated in FIG. 2, a brake disk 60 may comprise a sliding portion 70 and a mounting portion 80 which are separated from each other, and may be configured to partially reduce thermal expansion generated at the sliding portion 70 by coupling the sliding portion 70 and the mounting portion 80 to be relatively movable in a certain range through coupling members 90.

Specifically, the brake disk 60 illustrated in FIG. 2 is configured such that a coupling hole 74 is formed in an coupling portion 72 provided on an inner circumferential surface of the sliding portion 70, a recess 82 is formed to extend in a radially inward direction in an outer circumferential surface of the mounting portion 80, a bolt 92 of a coupling member 90 inserted into the coupling hole 74 of the sliding portion 70 is inserted into the recess 82 of the mounting portion 80, an elastic member 94 is coupled to the bolt 92 from one side, and a nut 96 is fastened to the bolt 92. The brake disk 60 is configured to absorb, in a certain range, thermal expansion generated at the sliding portion 70 of the brake disk 60 as the bolt 92 of the coupling member 90 that couples the sliding portion 70 and the mounting portion 80 moves radially inside the recess 82 of the mounting portion 80.

However, although the brake disk 60 of such a structure has the advantage of being able to absorb some of the thermal expansion generated at the brake disk 60, there is a matter in that the structure of the brake disk is complex, the weight and cost of the brake disk and the wheel bearing assembly is increased due to the increased number of parts, and the brake disk 60 is manufactured with a plurality of members, which reduces the manufacturing property and maintenance of the brake disk and the wheel bearing assembly.

### [Disclosure]

### [Technical Problem]

The present invention was made to solve the above-mentioned matters, and the present invention is for the purpose of providing a wheel bearing assembly having a configuration in which a fastening structure between a wheel bearing and a brake disk is improved, and configured to be capable of actively absorbing thermal deformation of the brake disk to prevent the generation of vibration and noise due to the thermal expansion of the brake disk and implementing both a reduction in weight and an improvement in maintenance.

### [Technical Solution]

Representative configurations of the present invention to achieve the above objects are described below.

An aspect of the present invention provides a wheel bearing assembly for supporting a wheel of a vehicle so that the wheel is rotatably mounted on a vehicle body. A wheel bearing assembly according to an example embodiment of the present invention may comprise: a wheel bearing configured to support a rotary element so that the rotary element rotates relative to a non-rotary element via rolling bodies; and a brake disk mounted to the rotary element of the wheel bearing. According to an example embodiment of the present invention, the brake disk may comprise a friction plate in friction contact with a brake pad, and a disk mounting portion used to couple the friction plate to the rotary element of the wheel bearing. According to an example embodiment of the present invention, one of the rotary element of the wheel bearing and the disk mounting portion of the brake disk may be provided with at least one coupling protruded portion formed to protrude in a radial direction, the other of the rotary element of the wheel bearing and the disk mounting portion of the brake disk may be provided with at least one coupling recess into which the coupling protruded portion is inserted to be coupled to the coupling recess, and the coupling protruded portion may be accommodated in and coupled to the coupling recess with a fastening clip provided between the coupling protruded portion and the coupling recess.

According to an aspect of the present invention, the fastening clip may be configured to slide toward the coupling recess in the radial direction so as to be coupled to the coupling recess.

According to an aspect of the present invention, the fastening clip may comprise two sidewall portions and a connection portion connecting the two sidewall portions to each other, and the fastening clip may be configured such that the two sidewall portions are coupled to circumferential side surfaces of the coupling recess so as to be accommodated in the coupling recess.

According to an aspect of the present invention, a release region may be provided outside or inside the coupling recess in the radial direction so that the fastening clip moves to the release region when separating the fastening clip coupled to the coupling recess, and the release region may be configured to be in communication with the coupling recess in the radial direction.

According to an aspect of the present invention, the release region may be formed greater in width than the coupling recess in the circumferential direction.

According to an aspect of the present invention, the two sidewall portions of the fastening clip may comprise at least one guide plate formed to extend perpendicular to a rotational axis of the wheel bearing assembly.

According to an aspect of the present invention, each of the two sidewall portions of the fastening clip may comprise a pair of guide plates formed to extend perpendicular to the rotational axis of the wheel bearing assembly, and a recess connection portion positioned between the coupling recesses may be configured to be inserted into and coupled to a space between the pair of guide plates.

According to an aspect of the present invention, a first locking coupling portion may be provided between the fastening clip and the recess connection portion to determine a position at which the fastening clip and the recess connection portion are coupled to each other in the radial direction.

According to an aspect of the present invention, the first locking coupling portion may comprise: a first locking protrusion formed in one of the fastening clip and the recess connection portion; and a first locking groove formed in the other of the fastening clip and the recess connection portion and, to which the first locking protrusion is locked and coupled.

According to an aspect of the present invention, the coupling protruded portion may be configured to be coupled to the fastening clip along the rotational axis of the wheel bearing, and a second locking coupling portion may be provided between the fastening clip and the coupling protruded portion to determine a position at which the fastening clip and the coupling protruded portion are coupled to each other in an axial direction.

According to an aspect of the present invention, the second locking coupling portion may comprise: a second locking protrusion formed in one of the fastening clip and the coupling protruded portion; and a second locking groove formed in the other of the fastening clip and the coupling protruded portion, and to which the second locking protrusion is locked and coupled.

According to an aspect of the present invention, the fastening clip may further comprise an axial surface formed to extend from the connection portion, and an axial end portion of the coupling protruded portion may be entirely or partially covered by the axial surface.

According to an aspect of the present invention, an end potion of the axial surface may be locked and coupled to one side of a front end portion of the coupling protruded portion.

According to an aspect of the present invention, the end portion of the axial surface may be formed to be bent toward the connection portion.

According to an aspect of the present invention, the coupling protruded portion may be formed to protrude outward in the radial direction from a wheel-side mounting flange provided in the rotary element of the wheel bearing, and the coupling recess may be formed to be depressed outward in the radial direction from the disk mounting portion of the brake disk.

Further, the vehicle wheel bearing assembly according to the present invention may further comprise other additional configurations without departing from the technical sprit of the present invention.

### [Advantageous Effects]

A wheel bearing assembly according to an example embodiment of the present invention is configured such that a coupling protruded portion formed on one of a wheel bearing and a brake disk is accommodated in and coupled to a coupling recess formed in the other of the wheel bearing and the brake disk, and a fastening clip is provided between the coupling protruded portion and the coupling recess to support the coupling therebetween. This makes it possible to absorb thermal deformation of the brake disk by the fastening clip in a certain range while performing the fastening between the wheel bearing and the brake disk in a simpler and easier manner. As a result, the performance and the lifetime of the wheel bearing assembly can be enhanced.

Further, the wheel bearing assembly according to an example embodiment of the present invention is configured such that a release region in which the fastening clip is movable is provided radially outside or inside a mounting portion (for example, the coupling recess) on which the fastening clip is mounted. This makes it possible to easily release the coupling state between the brake disk and the wheel bearing while moving the fastening clip to the release region at the time of separating the brake disk from the wheel bearing, thereby improving the disassembling and maintenance of the brake disk.

### [Description of Drawings]

FIG. 1 exemplarily illustrates a basic structure of a wheel bearing assembly.
FIG. 2 exemplarily illustrates an example of a floating type brake disk.
FIG. 3 exemplarily illustrates a structure of a wheel bearing assembly according to an example embodiment of the present invention.
FIG. 4 exemplarily illustrates a state in which a wheel bearing and a brake disk are coupled to each other in the wheel bearing assembly according to an example embodiment of the present invention.
FIG. 5 exemplarily illustrates a cross-sectional structure of the wheel bearing assembly according to an example embodiment of the present invention.
FIG. 6 exemplarily illustrates a cross-sectional structure of the wheel bearing according to an example embodiment of the present invention.
FIG. 7 exemplarily illustrates a structure of the brake disk according to an example embodiment of the present invention.
FIG. 8 exemplarily illustrates a structure of a fastening clip used to couple the brake disk to the wheel bearing in the wheel bearing assembly according to an example embodiment of the present invention.
FIG. 9 exemplarily illustrates a state in which the fastening clip is coupled to the wheel bearing in the wheel bearing assembly according to an example embodiment of the present invention.
FIG. 10 exemplarily illustrates a process of assembling the wheel bearing and the brake disk in the wheel bearing assembly according to an example embodiment of the present invention.
FIG. 11 exemplarily illustrates a process of separating the wheel bearing and the brake disk from each other in the wheel bearing assembly according to an example embodiment of the present invention.

### <EXPLANATION OF REFERENCE NUMERALS>

100: Wheel bearing assembly
200: Wheel bearing
210: Rotary element
220: Wheel hub
230: Wheel-side mounting flange
240: Coupling protruded portion
242: Second locking groove (formed in coupling protruded portion)
244: Projected portion (of coupling protruded portion)
246: Front end surface (of proj ected portion)
248: Radial inner surface (of projected portion)
250: Inner ring
260: Non-rotary element (for example, outer ring)
270: Rolling body
300: Brake disk
310: Friction plate
320: Disk mounting portion
330: Coupling recess
340: Recess connection portion
350: First locking groove
350: Release region
400: Fastening clip
410: Sidewall portion (of fastening clip)
420: Guide plate (of fastening clip)
425: First locking protrusion
430: Connection portion (of fastening clip)
435: Second locking protrusion
440: Axial surface (of fastening clip)
445: End portion (of axial surface)
500: Disassembling tool

### [Modes of the Invention]

Hereinafter, preferred embodiments of the present invention will be described in detail with reference to the appended drawings to such an extent that the present invention may be readily practiced by one of ordinary skill in the art.

Detailed descriptions of parts irrelevant to the present invention will be omitted for the purpose of more clearly describing the present invention. Throughout the specification, the same components will be described using same reference numerals. In addition, the sizes, thicknesses, positions, and the like of the respective components illustrated in the drawings are arbitrarily illustrated for the sake of convenience in description, and hence the present invention is not necessarily limited thereto. That is, it should be understood that specific shapes, configurations, and characteristics described in the specification may be modified in various embodiments without departing from the spirit and scope of the prevent disclosure, and positions or arrangements of individual components may be modified without departing from the spirit and scope of the prevent disclosure. Therefore, detailed descriptions to be described below should be construed as non-limitative senses, and the scope of the prevent disclosure should be understood to include appended claims and their equivalents.

### Wheel Bearing Assembly according to an Example Embodiment of the Present invention

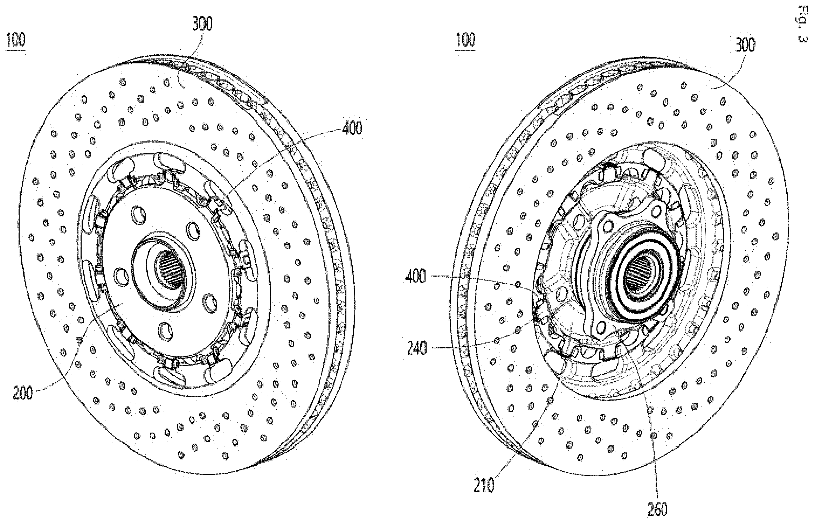

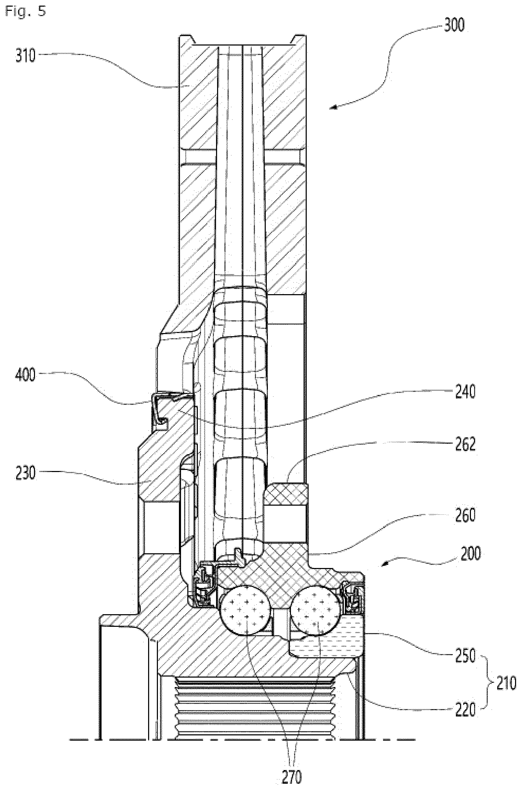

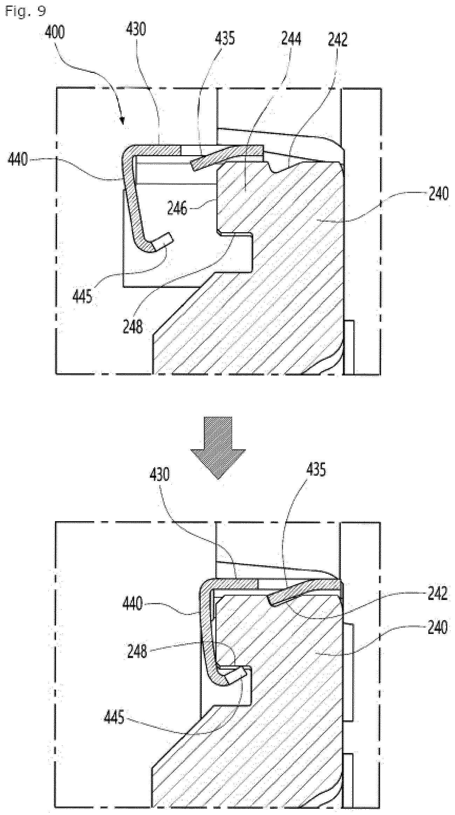

Referring to FIGS. 3 to 11, there is exemplarily illustrated a wheel bearing assembly 100 according to an example embodiment of the present invention. As illustrated in the figures, like a wheel bearing assembly in the related art, the wheel bearing assembly 100 according to an example embodiment of the present invention may perform a function of supporting a wheel of a vehicle so that the wheel is rotatably mounted on a vehicle body, and a brake disk 300 may be mounted on one side of a wheel bearing 200 to brake the rotation of the wheel bearing 200.

According to an example embodiment of the present invention, the wheel bearing 200 may be formed in a structure that is substantially similar to a wheel bearing for a vehicle in the related art. For example, the wheel bearing 200 according to an example embodiment of the present invention may be configured such that a rotary element 210, which rotates together with the wheel W mounted thereto, is connected to a non-rotary element 260, which is mounted on a chassis component or the like of the vehicle and is fixed to the vehicle body, via a plurality of rolling bodies 270, thereby rotatably supporting the wheel mounted on the rotary element 210 relative to the vehicle body.

According to an example embodiment of the present invention, the rotary element 210 may be configured to comprise a wheel hub 220 on which the wheel of the vehicle is mounted, and an inner ring 250 mounted to the wheel hub 220 in a press-fitting manner. The non-rotary element 260 may be configured with an outer ring coupled to the chassis component of the vehicle.

However, the wheel bearing according to an example embodiment of the present invention is not limited to such a structure, but may be modified into other various structures that may be applied to the wheel bearing in the related art.

According to an example embodiment of the present invention, the wheel hub 220 constituting the rotary element 210 may be formed in an approximately cylindrical shape extending along an axial direction. A mounting flange (wheel-side mounting flange 230) may be provided on one side of the wheel hub 220. For example, the wheel-side mounting flange 230 may be formed in a shape that extends outward from the wheel hub 220 in a radial direction and may be used to mount the wheel and/or the brake disk to the wheel hub 220. On the other hand, the inner ring 250 may be mounted on a vehicle-body-side end portion of the wheel hub 220 in a press-fitting manner. A raceway (inner raceway) may be formed on a portion of an outer circumferential surface of the wheel hub 220 to support the rolling bodies 270 from a radially inward direction.

According to an example embodiment of the present invention, at least one inner ring 250 may be mounted on the wheel hub 220 in a press-fitting manner. A raceway (inner raceway) may be provided on an outer circumferential surface of the inner ring 250 to support the rolling bodies 270 from the radially inward direction.

In the case of the example embodiments illustrated in the figures, one raceway for supporting the rolling bodies is formed directly on the portion of the outer circumferential surface of the wheel hub. However, the wheel bearing according to an example embodiment of the present invention may be changed to have various other configurations, such as a configuration in which two inner rings are mounted on the wheel hub and raceways (inner raceways) for the rolling bodies are formed on the two inner rings.

According to an example embodiment of the present invention, the outer ring constituting the non-rotary element 260 may be configured to have an outer circumferential surface on which a mounting flange (vehicle-body-side mounting flange 262) connected to the vehicle body is provided, and an inner circumferential surface on which raceways (outer raceways) in contact with the rolling bodies 270 are provided. The raceways (outer raceways) formed on the inner circumferential surface of the outer ring may be configured to receive and support the rolling bodies 270, which are rolling elements, between the outer raceways and the inner raceways in cooperation with the raceways (inner raceways) formed on the rotary element (for example, the wheel hub 220 and/or the inner ring 250).

According to an example embodiment of the present invention, the rolling bodies 270 may be disposed between the rotary element 210 and the non-rotary element 260 to perform the function of rotatably supporting the wheel mounted to the rotary element 210 relative to the vehicle body to which the non-rotary element 260 is coupled.

According to an example embodiment of the present invention, the brake disk 300 may be configured to be coupled to the rotary element 210 of the wheel bearing 200.

According to an example embodiment of the present invention, the brake disk 300 may be configured to include a friction plate 310 that generates a braking force by a frictional contact with a brake pad (not illustrated) provided in the vehicle, and a disk mounting portion 320 that extends from an inner circumferential surface of the friction plate 310 in the radially inward direction and is used to couple the brake disk 300 to the wheel bearing 200.

According to an example embodiment of the present invention, a fastening structure may be provided between the wheel bearing 200 and the brake disk 300 to interconnect the wheel bearing 200 and the brake disk 300. In particular, the wheel bearing assembly 100 according to an example embodiment of the present invention may have a configuration in which an improved fastening structure is provided between the rotary element 210 of the wheel bearing 200 and the disk mounting portion 320 of the brake disk 300 to complement thermal deformation of the brake disk and facilitate easy coupling between the wheel bearing and the brake disk.

According to an example embodiment of the present invention, the fastening structure between the wheel bearing 200 and the brake disk 300 may comprise at least one coupling protruded portion 240 formed to extend in a radial direction from one of the rotary element 210 of the wheel bearing and the disk mounting portion 320 of the brake disk, and at least one coupling recess 330 formed to be depressed in the radial direction from the other of the rotary element 210 of the wheel bearing and the disk mounting portion 320 of the brake disk, and may be configured such that the coupling protruded portion 240 is inserted into the coupling recess 330 to mount the brake disk to the wheel bearing, and a fastening clip 400 to be described below is provided between the coupling protruded portion 240 and the coupling recess 330.

For example, the wheel bearing 200 according to an example embodiment of the present invention may be configured such that the coupling protruded portion 240 is provided on the rotary element 210 to extend in a in the radially outward direction, the coupling recess 330 is formed to be depressed in the in the radially outward direction in the disk mounting portion 320 of the brake disk 300, and the coupling protruded portion 240 is accommodated in and coupled to the coupling recess 330. The fastening clip 400 may be provided between the coupling protruded portion 240 and the coupling recess 330 such that the coupling protruded portion 240 and the coupling recess 330 are coupled to each other with a certain elasticity.

Specifically, in the case of the example embodiment illustrated in the figures, the coupling protruded portion 240 extending in the radially outward direction is formed on the wheel-side mounting flange 230 of the wheel hub 220 that constitutes the rotary element 210 of the wheel bearing 200, and the coupling recess 330 formed to be depressed in the radially outward direction is formed in the inner circumferential surface of the disk mounting portion 320 of the brake disk 300 so that the coupling protruded portion 240 is inserted into and coupled to the coupling recess 330 and thus the brake disk 300 is mounted on the wheel hub 220 of the wheel bearing 200.

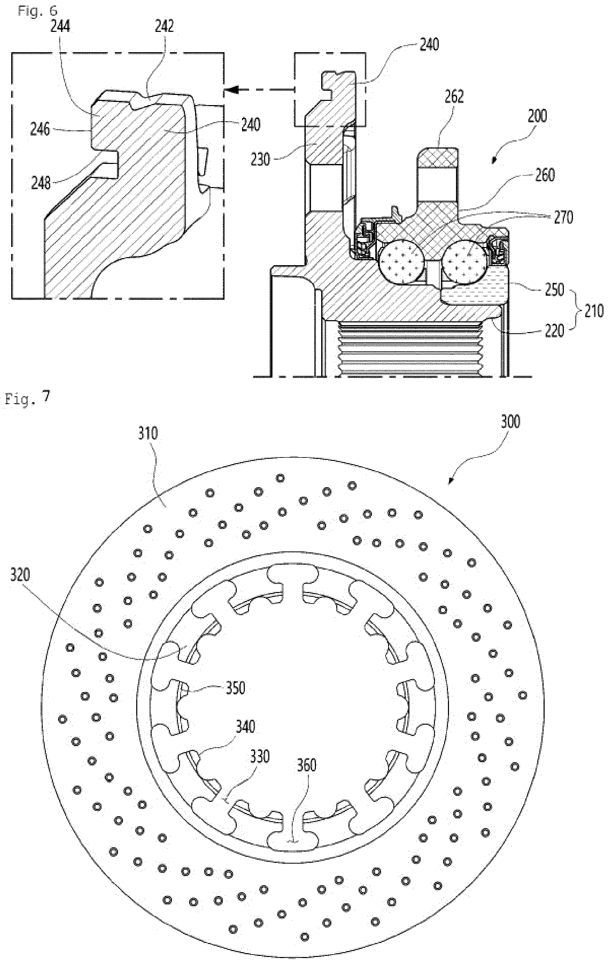

According to an example embodiment of the present invention, as illustrated in FIG. 7, one or more coupling recesses 330 form to be depressed in the radially outward direction may be provided on the disk mounting portion 320 of the brake disk 300 in a circumferential direction. A release region 360, to which the fastening clip 400 described below may be moved and located, may be provided outside the coupling recess 330 in the radial direction.

According to an example embodiment of the present invention, as illustrated in FIG. 7, the release region 360 may be formed in a structure having a penetrated slit shape that penetrates the brake disk 300 and extends along the circumferential direction. The release region 360 may perform a function of allowing, when the brake disk 300 is separated from the wheel bearing 200, the fastening clip 400 to move in the radial direction so as to release the fastening between the wheel bearing and the brake disk, which will be described below. In order to allow the fastening clip 400 to be easily released, the release region 360 may be formed longer than the coupling recess 330 in the circumferential direction and may be in communication with the coupling recess 330 in the radial direction.

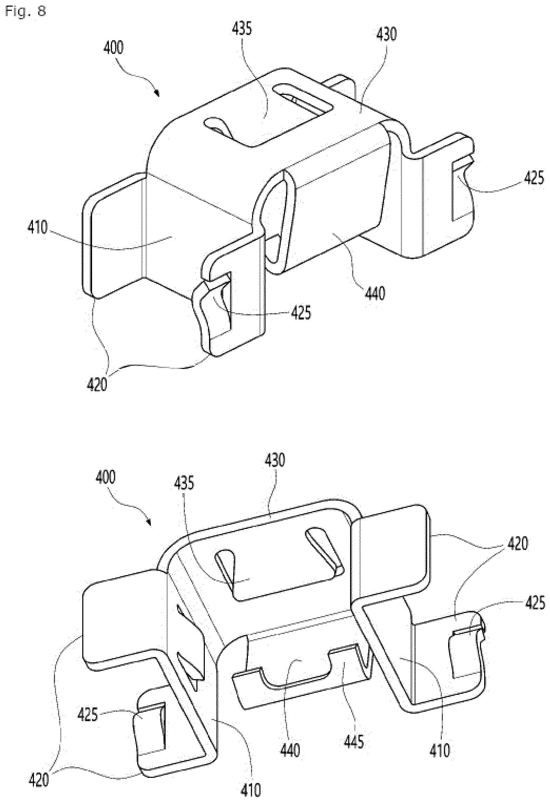

According to an example embodiment of the present invention, as illustrated in FIG. 8, the fastening clip 400 may comprise two side portions 410 and a connection portion 430 connecting between the two side portions 410, and may be formed to have a cross-sectional structure of a substantially U-shape when viewed in a plane perpendicular to the rotational axis of the wheel bearing assembly.

According to an example embodiment of the present invention, the two side portions 410 are portions defining sidewalls of the fastening clip 400, and the two side portions 410 of the fastening clip 400 may be coupled to both surfaces of the coupling recess 330 in the circumferential direction.

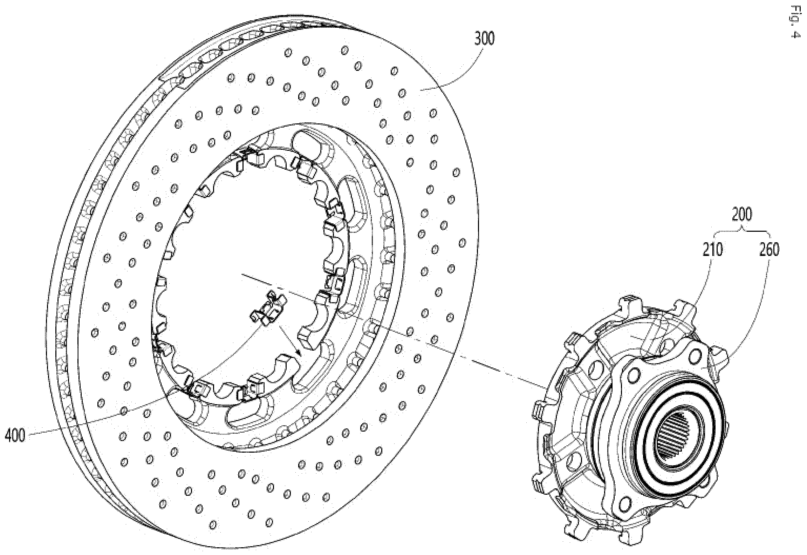

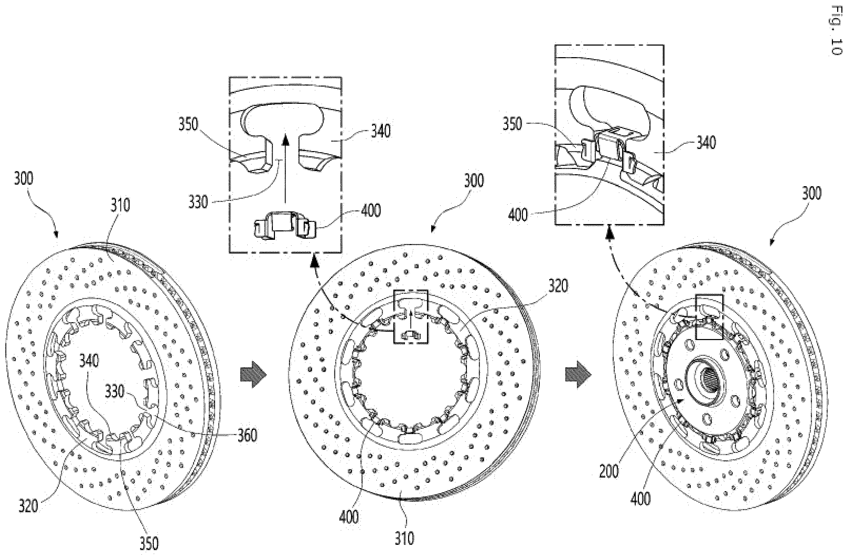

For example, according to an example embodiment of the present invention, as illustrated in FIGS. 4 and 10, the fastening clip 400 may be configured to slide in the radial direction to be fastened to the coupling recess 330.

According to an example embodiment of the present invention, the two side portions 410 of the fastening clip 400 may be provided with at least one guide plate 420 formed to extend in a direction perpendicular to the rotational axis of the wheel bearing. For example, in the case of the example embodiment illustrated in the figures, each of the two side portions 410 of the fastener member 400 may be provided with a pair of guide plates 420, and a recess connection portion 340 provided between adjacent coupling recesses 330 may be inserted into and mounted in a space between the pair of guide plates 420.

According to an example embodiment of the present invention, the fastening clip 400 may be configured to have a locking coupling portion (a first locking coupling portion) to determine a position at which the fastening clip 400 is to be coupled to the coupling recess 330 in the radial direction and to maintain such a coupling state of the fastening clip 400.

For example, the wheel bearing assembly 100 according to an example embodiment of the present invention may be configured such that an locking protrusion (for example, a first locking protrusion 425) is formed to extend from the guide plates 420 of the fastening clip 400, a locking groove (a first locking groove 350) is formed to correspond to the locking protrusion in the recess connection portion 340 between adjacent coupling recesses 330, and the first locking protrusion 425 is locked and coupled to the first locking groove 350 to support the coupling between the fastening clip 400 and the coupling recess 330 in the radial direction.

According to an example embodiment of the present invention, the first locking protrusion 425 provided in the fastening clip 400 may be formed as a bent locking portion formed by bending one side of the fastening clip 400. A surface of the fastening clip 400, which is to be brought into contact with the recess connection portion 340, may be formed in a smooth curved structure so that, when the fastening clip 400 is inserted into and separated from the coupling recess 330, the fastening clip 400 may be easily slidably moved.

For example, in the case of the example embodiment illustrated in the figures, the first locking protrusion 425 is formed to be bent in any one guide plate 420 provided in the two side portions 410 of the fastening clip 400.

However, unlike the configuration of the example embodiment illustrated in the figures, a plurality of first locking protrusions 425 may be formed in each of the guide plates 420. Alternatively, the first locking protrusion 425 may be formed in the two side portions 410 instead of the guide plates 420 or together with the guide plates 420. The first locking groove 350 may be formed at a position corresponding to the first locking protrusion 425.

According to an example embodiment of the present invention, the connection portion 430 of the fastening clip 400 may extend between the two side portions 410 of the fastening clip to perform a function of connecting the two side portions 410 to each other. For example, as illustrated in FIG. 8, the fastening clip 400 may be configured to interconnect the two side portions 410 at end portions of the two side portions 410 of the fastening clip 400.

According to an example embodiment of the present invention, the coupling protruded portion 240 may be moved into and coupled to the fastening clip 400 along the central axis of the wheel bearing. At least one locking coupling portion (second locking coupling portion) may be provided between the fastening clip 400 and the coupling protruded portion 240 to determine a position at which the fastening clip 400 and the coupling protruded portion 240 are coupled to each other in the axial direction and to maintain such a coupling state.

According to an example embodiment of the present invention, the second locking coupling portion of the fastening clip 400 may be formed between one side of the fastening clip 400 and one side of the coupling protruded portion 240 corresponding thereto.

For example, in the case of the example embodiment illustrated in the figures, a depressed locking groove (second locking groove 242) is formed in one side of the coupling protruded portion 240 that is inserted into and coupled to the fastening clip 400, and a locking protrusion (second locking protrusion 435) that corresponds to the depressed locking groove and protrudes toward the coupling protruded portion is formed on one side of the fastening clip 400. Thus, the second locking protrusion 435 of the fastening clip 400 may be coupled to the second locking groove 242 of the coupling protruded portion 240.

With such a configuration, an axial coupling position of the locking protruded portion 240 inserted into the fastening clip 400 may be set by the locked coupling between the second locking protrusion 435 and the second locking groove 242, and the axial coupling state between the fastening clip 400 and the locking protruded portion 240 may be stably maintained.

According to an example embodiment of the present invention, in order to stably maintain the axial coupling state after the coupling protruded portion 240 is coupled to the fastening clip 400, the second locking groove 242 may have a stopper surface formed on a side opposite the coupling direction of the coupling protruded portion 240.

For example, in the case of the example embodiment illustrated in the figures, the second locking groove 242 may be formed in the form of a recess of a triangular cross-sectional structure having a vertical or sharp inclined surface on the opposite side of the coupling direction, and the second locking protrusion 435 of the fastening clip 400 is locked to a surface located on the opposite side of the coupling direction to support the coupling of the coupling protruded portion 240.

In the case of the example embodiment illustrated in the figures, the second locking groove 242 of a depressed structure is formed in the outer circumferential surface of the coupling protruded portion 240 and the second locking protrusion 435 formed to be bent from the connection portion 430 of the fastening clip 400 is inserted into and coupled to the second locking groove 242. However, unlike the example embodiment illustrated, the locking coupling portion for the axial coupling between the coupling protruded portion 240 and the fastening clip 400 may be formed in the side portion 410 instead of or together with the connection portion 430. Alternatively, a plurality of locking coupling portions may be provided between the fastening clip and the coupling protruded portion by changing appropriately as needed.

Further, in the example embodiment illustrated in the figures, the locking coupling portion is formed in a structure in which the locking protrusion is formed on the fastening clip and the locking groove corresponding to the locking protrusion is formed on the mounting surface of the wheel bearing or the brake disk, but the formation positions of the locking protrusion and the locking groove may be appropriately changed by those skilled in the art as needed.

Further, according to an example embodiment of the present invention, the fastening clip 400 may have an axial surface 440 formed on one end portion in the axial direction, and an axial end surface of the coupling protruded portion 240 may be coupled to the axial surface 440.

Specifically, the axial surface 440 of the fastening clip 400 may extend in one direction from the connection portion 430 while being bent from the connection portion 430, and may be formed to cover one surface of the coupling protruded portion 240 accommodated in the fastening clip 400.

According to an example embodiment of the present invention, an end portion 445 of the axial surface 440 of the fastening clip 400 may be formed to be bent toward the connection portion 430 so as to more stably accommodate the coupling protruded portion 240 therein.

For example, according to an example embodiment of the present invention, the coupling protruded portion 240 may have a projected portion 244 that protrudes axially in a direction in which the coupling protruded portion 240 is coupled to the fastening clip 400, the axial surface 440 of the fastening clip 400 may cover a front end surface 246 of the projected portion 244 provided on the coupling protruded portion 240, and the bent end potion 445 of the axial surface 440 may be coupled to a radial inner surface 248 of the projected portion 244.

With the wheel bearing assembly 100 configured as above, the coupling protruded portion 240 formed on one of the wheel bearing 200 and the brake disk 300 is inserted into and coupled to the coupling recess 330 formed on the other of the wheel bearing 200 and the brake disk 300, and the coupling protruded portion 240 and the coupling recess 330 are configured to be coupled to each other through the fastening clip 400. Thus, unlike a wheel bearing assembly in the related art in which a brake disk is fixed and coupled to a wheel bearing through a plurality of fastening bolts, it is possible to easily absorb thermal deformation of the brake disk and inhibit matters such as vibration and noise due to such a thermal deformation, which makes it possible to enhance the performance of the wheel bearing assembly and prolong the lifetime thereof.

Further, unlike the wheel bearing assembly in the related art in which the brake disk is fully fixedly coupled to the wheel bearing through the fastening bolts, as described above, the wheel bearing assembly 100 according to an example embodiment of the present invention is configured to be displaceable in radial direction. Further, unlike the wheel bearing assembly in the related art as illustrated in FIG. 2, the wheel bearing assembly 100 according to an example embodiment of the present invention is configured such that the disk mounting portion formed to extend integrally from the friction plate of the brake disk is directly coupled to the wheel bearing. This makes it possible to further simplify the structure of the brake disk and the wheel bearing assembly and improve the coupling property between the brake disk and the wheel bearing assembly, thereby lightening the overall weight thereof.

Further, the wheel bearing assembly 100 according to an example embodiment of the present invention is configured such that one or more locking coupling portions are provided in the fastening clip 400 that supports the coupling between the wheel bearing 200 and the brake disk 300, which makes it possible to enable the fastening clip 400 to stably maintain the state in which the wheel bearing 200 and the brake disk 300 are coupled to each other.

Further, the wheel bearing assembly 200 according to an example embodiment of the present invention is configured such that the release region 360 communicating with the coupling recess 330 is provided inside or outside the coupling recess 330 into which the fastening clip 400 is coupled in the radial direction. Thus, when the brake disk 300 is separated from the wheel bearing 200, the fastening clip 400 is allowed to be moved in the radial direction to release the fastening between the fastening clip 400 and the coupling protruded portion 240, which makes it possible to release the coupling between the wheel bearing 200 and the brake disk 300 and thus facilitate the disassembling and maintenance (serviceability) of the wheel bearing 200 and/or the brake disk 300.

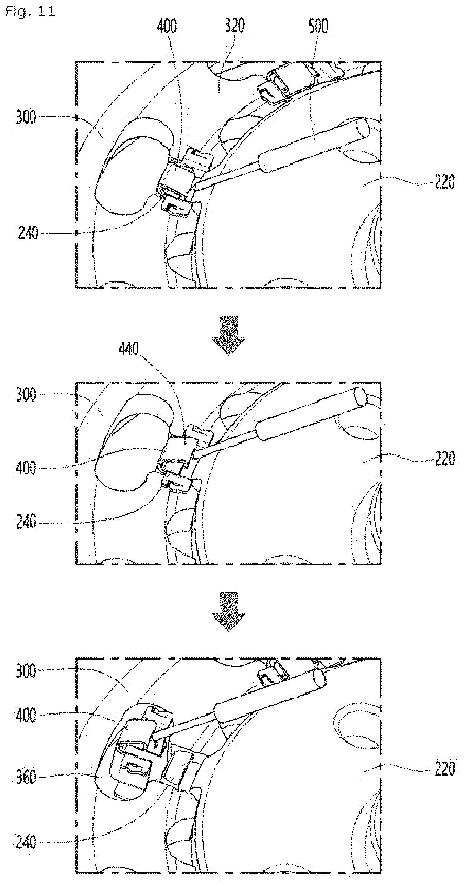

For example, referring to FIGS. 10 and 11, there are exemplarily illustrated states in which the wheel bearing 200 and the brake disk 300 are coupled to each other and separated from each other in the wheel bearing assembly 100 according to an example embodiment of the present invention.

First, as illustrated in FIG. 10, in the wheel bearing assembly 100 according to an example embodiment of the present invention, the brake disk 300 may be mounted on the wheel bearing 200 by coupling the fastening clip 400 to the coupling recess 330 formed in one of the wheel bearing 200 and the brake disk 300, and then inserting the coupling protruded portion 240 formed in the other of the wheel bearing 200 and the brake disk 300 into the fastening clip 400.

Specifically, according to an example embodiment of the present invention, the fastening clip 400 may be configured to slide in the radial direction and be coupled to the coupling recess 330, and the locking protrusion (the first locking protrusion 425) formed in the fastening clip 400 is locked and coupled to the locking groove (the first locking groove 350) formed in the recess connection portion 340 between adjacent coupling recesses 330, as illustrated in the upper and middle diagrams of FIG. 10.

Further, the brake disk 300 are allowed to be moved relative to the wheel bearing 200 in the axial direction so that the fastening clip 400 may be inserted into and coupled to the coupling protruded portion 240 mounted within the coupling recess 330. The coupling between the fastening clip 400 and the coupling protruded portion 240 may be implemented by the locking coupling portion (the second locking protrusion 435 and the second locking groove 242) formed in the fastening clip 400 and the coupling protruded portion 240.

On the other hand, as illustrated in FIG. 11, the separation of the brake disk 300 from the wheel bearing 200 for replacement of the brake disk 300 or the like may be performed by moving the fastening clip 400 toward the release region 360 in the radial direction in a state in which the locking/coupling between the coupling protruded portion 240 and the fastening clip 400 is released using a disassembling tool 500, and then moving the brake disk 300 relative to the wheel bearing 200 in the axial direction.

As described above, the wheel bearing assembly 100 according to an example embodiment of the present invention is configured such that the wheel bearing 200 and the brake disk 300 are coupled to each other through the fastening clip 400, and the brake disk 300 is easily separated from the wheel bearing 200 by disassembling the fastening clip 400 in an easier manner. This makes it possible to greatly improve the maintenance of the brake disk 300 and/or the wheel bearing 200.

While the present invention has been described above by way of particular features such as specific constituent elements and the like, and exemplary embodiments, these embodiments are provided to further facilitate overall understanding of the present invention, and the present invention is not limited thereto. Various modifications and variations may be made from the above descriptions by those skilled in the art.

For example, in the case of the example embodiments illustrated in the figures, the coupling protruded portion has been described to be formed in the wheel bearing and the coupling recess corresponding to the coupling protruded portion has been described to be formed in the brake disk. However, the wheel bearing assembly according to an example embodiment of the present invention may be modified into other structure in which the coupling protruded portion is formed in the brake disk and the coupling recess is formed in the wheel bearing without departing from the spirit of the present invention.

Therefore, the spirit of the present invention should not be limited to the above-described embodiments, and not only the append claims but also all those modified equally or equivalently to the claims are intended to fall within the scope of the spirit of the present invention.

## Claims

1. A wheel bearing assembly 100 for supporting a wheel of a vehicle so that the wheel is rotatably mounted on a vehicle body, the wheel bearing assembly comprising:
a wheel bearing 200 configured to support a rotary element 210 so that the rotary element 210 rotates relative to a non-rotary element 260 via rolling bodies 270; and
a brake disk 300 mounted to the rotary element 210 of the wheel bearing 200,
wherein the brake disk 300 comprises a friction plate 310 in friction contact with a brake pad, and a disk mounting portion 320 used to couple the friction plate 310 to the rotary element 210 of the wheel bearing 200,
one of the rotary element 210 of the wheel bearing 200 and the disk mounting portion 320 of the brake disk 300 is provided with at least one coupling protruded portion 240 formed to protrude in a radial direction, and the other of the rotary element 210 of the wheel bearing 200 and the disk mounting portion 320 of the brake disk 300 is provided with at least one coupling recess 330 into which the coupling protruded portion 240 is inserted to be coupled to the coupling recess 330, and
the coupling protruded portion 240 is accommodated in and coupled to the coupling recess 330 with a fastening clip 400 provided between the coupling protruded portion 240 and the coupling recess 330.

2. The wheel bearing assembly of Claim 1, wherein the fastening clip 400 is configured to slide toward the coupling recess 330 in the radial direction so as to be coupled to the coupling recess 330.

3. The wheel bearing assembly of Claim 2, wherein the fastening clip 400 comprises two sidewall portions 410 and a connection portion 430 connecting the two sidewall portions 410 to each other, and
the fastening clip 400 is configured such that the two sidewall portions 410 are coupled to circumferential side surfaces of the coupling recess 330 so as to be accommodated in the coupling recess 330.

4. The wheel bearing assembly of any one of Claims 1 to 3, wherein a release region 360 is provided outside or inside the coupling recess 330 in the radial direction so that the fastening clip 400 moves to the release region 360 when separating the fastening clip 400 coupled to the coupling recess 330, and
the release region 360 is configured to be in communication with the coupling recess 330 in the radial direction.

5. The wheel bearing assembly of Claim 4, wherein the release region 360 is formed greater in width than the coupling recess 330 in the circumferential direction.

6. The wheel bearing assembly of any one of Claims 1 to 5, wherein the two sidewall portions 410 of the fastening clip 400 comprise at least one guide plate 420 formed to extend perpendicular to a rotational axis of the wheel bearing assembly.

7. The wheel bearing assembly of Claim 6, wherein each of the two sidewall portions 410 of the fastening clip 400 comprises a pair of guide plates 420 formed to extend perpendicular to the rotational axis of the wheel bearing assembly, and
a recess connection portion 340 positioned between the coupling recesses 330 is configured to be inserted into and coupled to a space between the pair of guide plates 420.

8. The wheel bearing assembly of Claim 7, wherein a first locking coupling portion is provided between the fastening clip 400 and the recess connection portion 340 to determine a position at which the fastening clip 400 and the recess connection portion 340 are coupled to each other in the radial direction.

9. The wheel bearing assembly of Claim 8, wherein the first locking coupling portion comprises:
a first locking protrusion 425 formed in one of the fastening clip 400 and the recess connection portion 340; and
a first locking groove 350 formed in the other of the fastening clip 400 and the recess connection portion 340, and to which the first locking protrusion 425 is locked and coupled.

10. The wheel bearing assembly of Claim 7, wherein the coupling protruded portion 240 is configured to be coupled to the fastening clip 400 along the rotational axis of the wheel bearing, and
a second locking coupling portion is provided between the fastening clip 400 and the coupling protruded portion 240 to determine a position at which the fastening clip 400 and the coupling protruded portion 240 are coupled to each other in an axial direction.

11. The wheel bearing assembly of Claim 10, wherein the second locking coupling portion comprises:
a second locking protrusion 435 formed in one of the fastening clip 400 and the coupling protruded portion 240; and
a second locking groove 242 formed in the other of the fastening clip 400 and the coupling protruded portion 240, and to which the second locking protrusion 435 is locked and coupled.

12. The wheel bearing assembly of any one of Claims 1 to 11, wherein the fastening clip 400 further comprises an axial surface 440 formed to extend from the connection portion 430, and
an axial end portion of the coupling protruded portion 240 is entirely or partially covered by the axial surface 440.

13. The wheel bearing assembly of Claim 12, wherein an end potion 445 of the axial surface 440 is locked and coupled to one side of a front end portion of the coupling protruded portion 240.

14. The wheel bearing assembly of Claim 13, wherein the end portion 445 of the axial surface 440 is formed to be bent toward the connection portion 430.

15. The wheel bearing assembly of any one of Claims 1 to 14, wherein the coupling protruded portion 240 is formed to protrude outward in the radial direction from a wheel-side mounting flange 230 provided in the rotary element 210 of the wheel bearing 200, and
the coupling recess 330 is formed to be depressed outward in the radial direction from the disk mounting portion 320 of the brake disk 300.
